# EUROPEAN PATENT APPLICATION

(11) **EP 4 553 000 A1**
(43) Date of publication of application: **14.05.2025**
(21) Application number: 22950243.0
(22) Date of filing: 07.07.2022
(51) Int. Cl.: B65D 85/10

(54) **PACKAGING AND PACKAGING PRODUCTION METHOD**

(71) Applicant: Japan Tobacco Inc., Tokyo 105-6927 (JP)
(72) Inventor: ENDO, Hiroyuki, Tokyo 130-8603 (JP)
(74) Representative: Hoffmann Eitle
(86) International application number: PCT/JP2022/026919
(87) International publication number: WO 2024/009449

(57) **Abstract**

Packaging that accommodates a tobacco product, and has a region that exhibits antibacterial properties and/or antiviral properties on at least a part of the surface thereof.

## Description

### Technical Field

The present invention relates to a packaging and a packaging production method.

### Background Art

PTL 1 relates to a package of a tobacco product etc., and discloses that the package includes a base paper constituting a package body, a color ink layer applied to the base paper, a flat and smooth glossy layer that imparts glossiness to the color ink layer, and a protruding layer on the glossy layer, the protruding layer being obtained by printing a transparent varnish into having a protruding shape under specified conditions.

### Citation List

### Patent Literature

PTL 1: Japanese Patent No. 5815719

### Summary of Invention

### Technical Problem

In most tobacco products, 20 tobacco pieces wrapped with an inner wrapping paper (paper having an aluminum layer on the inner side) are packed in a hard package made of a heavy paper or a soft package made of a thin paper, and either package is further wrapped with a film such as a shrink film (refer a related art such as PTL 1, Fig. 2, etc.).

In recent years, consumers have sought increased cleanness and safety in various products. In particular, recent years have seen viral infections grow into a global threat, and it is possible that the packages of tobacco products classified as food would also be required to take antibacterial and/or antiviral measures.

An object of the present invention is to provide a tobacco product packaging that has antibacterial performance and antiviral performance.

### Solution to Problem

A first feature of the present invention completed under the aforementioned object is a packaging accommodating a tobacco product and having a region in at least a part of a surface thereof, the region exhibiting antibacterial properties and/or antiviral properties.

A second feature may be a hard package made of a heavy paper or a soft package made of a thin paper.

In a third feature, a layer containing an additive having antibacterial performance and/or antiviral performance may be present in the surface.

In a fourth feature, the additive may be at least one selected from the group consisting of silver ion-based, titanium oxide-based, calcium hydroxide-based, halogen-based, copper ion-based, peroxide/ozone-based, quaternary ammonium-based, amine-based, alcohol-based, aldehyde-based, phenol-based, carboxylic acid-based, isothiocyanate-based, isothiazoline-based, piguanide-based, pyridine-based, epoxide-based, and surfactant-based substances.

In a fifth feature, the additive may be applied to 60% or more of the surface.

A sixth feature is a packaging production method for producing a packaging that accommodates a tobacco product and that has a region in at least a part of a surface thereof, the region exhibiting antibacterial properties and/or antiviral properties, the method including applying, to a substrate of the packaging, a printing ink that has the
antibacterial properties and/or antiviral properties or a varnish that has the antibacterial properties and/or antiviral properties.

### Advantageous Effects of Invention

According to the first feature, a packaging that is imparted with antibacterial performance and/or antiviral performance and that accommodates a tobacco product can be provided.

According to the second feature, the benefits of the antibacterial performance and antiviral performance can be enjoyed while carrying the package in a bag, a pocket, etc.

According to the third, fourth, and fifth features, the antibacterial performance and the antiviral performance can be imparted to the packaging.

According to the sixth feature, a packaging that is imparted with antibacterial performance and antiviral performance and that accommodate a tobacco product can be produced.

### Brief Description of Drawings

[Fig. 1] Fig. 1 is a perspective view illustrating one example of a hard package according to a first embodiment with a lid closed.
[Fig. 2] Fig. 2 is a perspective view illustrating one example of the hard package according to the first embodiment with a lid open.
[Fig. 3] Fig. 3 is a perspective view illustrating one example of a soft package according to a second embodiment as viewed from obliquely above from the front side.
[Fig. 4] Fig. 4 is a perspective view illustrating one example of the soft package according to the second embodiment as viewed from obliquely above from the rear side.

### Description of Embodiments

Embodiments of the present invention will now be described in detail by referring to the attached drawings. The embodiments described below are merely illustrative and do not limit the technical scope of the present invention. In the drawings, the same parts are represented by the same reference sign.

In the present disclosure, a phrase indicating a numerical range, such as "X or more and Y or less" and "X to Y" means a numerical range that includes the disclosed upper and lower limits unless otherwise noted.

### <Tobacco product>

In each of the embodiments of the present invention, the tobacco product to be accommodated is not particularly limited. Examples of the tobacco product include cigarettes (filter cigarettes, non-filter cigarettes (filter-less), cigars, cigarillos, electronic cigarettes, and smokeless tobaccos (chewing tobaccos and snuff).

### <First embodiment: hard package>

A packaging 1 according to a first embodiment accommodates a tobacco product, and has a region in at least a part of a surface thereof, the region exhibiting antibacterial properties and/or antiviral properties.

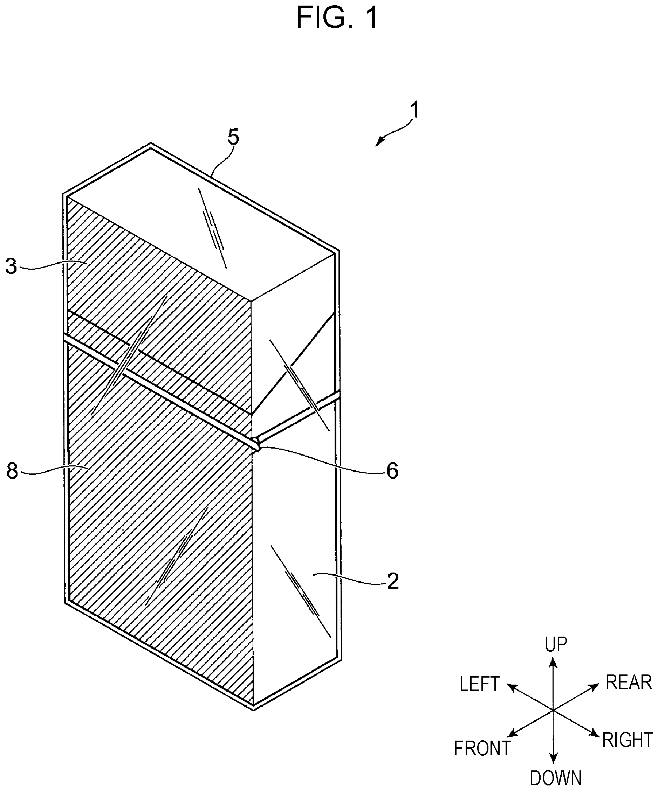

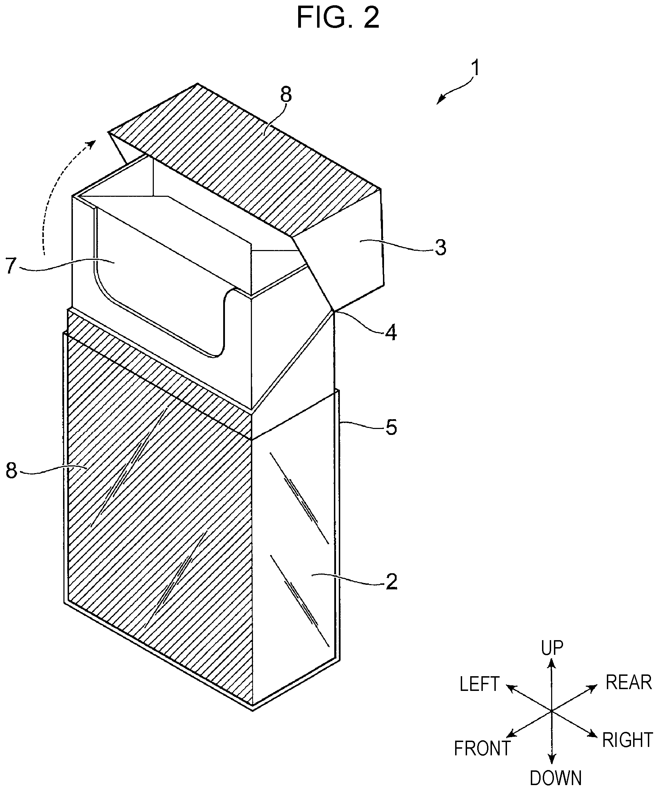

Figs. 1 and 2 are perspective views illustrating one example of a hard package according to the first embodiment. Fig. 1 illustrates a state in which the lid is closed, and Fig. 2 illustrate a state in which the lid is open. The hard package is constituted by a package body 2 and a lid 3, and has a substantially cuboid shape. The structure is formed such that the lid 3 is freely openable and closable on a hinge 4 in the upper portion of the rear surface of the package body 2.

Here, as directions are illustrated in Fig. 1, the surface on which the hinge 4 that connects the package body 2 and the lid 3 is disposed is defined as a rear surface of the packaging 1, and the direction in which the rear surface faces is defined as rear. The surface opposite of the rear surface is defined as a front surface (anterior surface), and the direction in which the front surface faces is defined as front. In addition, a surface in which the lid 3 is provided and which faces a direction of taking out a content through an opening of the package body 2 that appears when the lid is opened is defined as an upper surface (top surface), the surface opposite the upper surface is defined as a bottom surface, and the directions in which the upper surface and the bottom surface face are respectively defined as up and down. Surfaces on the left side and the right side when the packaging 1 is viewed from the front are respectively defined as a left side surface and a right side surface.

Furthermore, as illustrated in Fig. 1, the hard package in a state before opening constitutes a packaging 1 entirely wrapped with a film 5. An open tape (tear tape) 6 is attached to the film 5 so as to extend around the front surface, the left side surface, the rear surface, and the right side surface of the hard package. The open tape 6 specifies where to tear when opening the film 5 and improves the opening ease of the film 5. The user can pick one end of the open tape 6 and tear the film 5 along the open tape 6.

Fig. 2 illustrates the packaging 1 after the film 5 is opened, in which an upper portion of the film 5 is removed to expose the lid 3 and the package body 2 therearound. As illustrated in Fig. 2, a content 7 appears from underneath the lid 3. In this embodiment, the content 7 is 20 pieces of a tobacco product (not illustrated in the drawing), such as cigarettes, wrapped with an inner wrapping paper and accommodated inside the hard package. An example of the inner wrapping paper is a laminate obtained by laminating an aluminum layer with an inner side of a paper substrate layer containing a fibrous cellulose-based material. Examples of the aluminum layer include a layer made of an aluminum foil and a layer formed by vapor-depositing aluminum on a paper substrate.

The hard package is also referred to as a hard pack, a box, or a hard box-type package, for example, and is formed by assembling a base paper into a box shape constituted by a package body 2 and a lid 3 as illustrated in Figs. 1 and 2.

Heavy papers such as one-side coated papers, art post papers, and cast coated papers can be used as the base paper used as the material for the hard package. The base paper is preferably a paper having a smooth and flat surface since the brightness of the hard package can be enhanced. The thickness of the base paper is not particularly limited. The grammage of the base paper is preferably 100 gsm or more and more preferably 180 gsm or more and more preferably 400 gsm or less and yet more preferably 240 gsm or less from the viewpoints of strength and formability for assembling into a box shape.

The surface of the hard package has antibacterial properties and/or antiviral properties. In Figs. 1 and 2, a region 8 that has antibacterial properties and/or antiviral properties is marked by oblique lines (hatching). This region 8 is where the varnish or ink described below is applied.

The region 8 that has antibacterial properties and/or antiviral properties exists as a layer that contains an additive that has antibacterial performance and/or antiviral performance. The additive in a form of a printing ink or a varnish is applied to a substrate of the packaging. Specifically, a printing ink that contains the aforementioned additive so as to exhibit the antibacterial properties and/or antiviral properties or a varnish that contains the aforementioned additive so as to exhibit the antibacterial properties and/or antiviral properties is used. These printing ink and varnish are preferably all water-soluble.

The region 8 that exhibits antibacterial properties and/or antiviral properties is at least a part of the surface of the hard package; however, from the viewpoint of providing wrapping that has antibacterial properties and/or antiviral properties, an area of preferably 60% or more, more preferably 70% or more, and yet more preferably 80% or more of the entire surface of the hard package exhibits antibacterial properties and/or antiviral properties. 95% or less is preferable as the blank, and, the printing ink or the varnish used in this embodiment is most preferably applied to substantially all of the hard package surface as the outer surface after forming.

The printing ink and the varnish can be applied by, for example, printing. When application is to be carried out on a part of the hard package surface, any desired site can be selected, and, for example, the entire front surface, the entire rear surface, or the like of the hard package can be selected.

After application of the printing ink or the varnish, the application amount in a dry state is preferably 1 g/m² or more and 20 g/m² or less, more preferably 2 g/m² or more and 10 g/m² or less, and particularly preferably 4 g/m² or more and 8 g/m² or less in order to impart the antibacterial and antiviral performance.

Here, "antibacterial" means suppression of bacterial growth on the product surface. In addition, "antiviral" means decreasing the number of viruses on the product surface.

The antibacterial activity evaluation is done by a test based on JIS Z 2801:2010 (Antibacterial products -- Test for antibacterial activity and efficacy). According to this test, a product can be determined to have an antibacterial efficacy when the vial count of bacteria (usually Escherichia coli and Staphylococcus aureus) on the surface of an antibacterial product after a pretreatment that involves predetermined durability tests (waterproofing test and light resistance test) is equal to or less than one hundredth (antibacterial activity value of 2.0 or more) of that of the surface of a non-antibacterial product.

Furthermore, the antiviral activity evaluation is done by a test based on ISO 21702:2019 (Measurement of antiviral activity on plastics and other non-porous surfaces). According to this test, a product can be determined to have an antiviral efficacy when the count of viruses (influenza virus and feline calicivirus) on the surface of an antiviral product after a pretreatment that involves predetermined durability tests (waterproofing test and light resistance test) is equal to or less than one hundredth (antiviral activity value of 2.0 or more) of that of the surface of a non-antiviral product.

For both the antibacterial activity evaluation and the antiviral activity evaluation, a durability test is required in order to voluntarily register products to The Society of International sustaining growth for Antimicrobial Articles (SIAA). A waterproofing test and a light resistance test are available as the durability test.

In a waterproofing test, under an assumption that a treated product imparted with antibacterial and/or antiviral functions would have the product surface lose its functions and would thereby exhibit degraded performance when the treated product comes into contact with water (or warm water), a test specimen is treated under test conditions (water temperature and immersion time) determined according to the waterproofing test category and is then subjected to a test (antibacterial activity test or an antiviral activity test) according to the performance of the treated product.

In a light resistance test, under an assumption that a treated product imparted with antibacterial and/or antiviral functions would exhibit degraded performance when the treated product is exposed to light (in particular, UV light), a test specimen is treated under test conditions (testing apparatus and irradiation time) determined according to the light resistance test category and is then subjected to a test (antibacterial activity test or an antiviral activity test) according to the performance of the treated product.

The additive that has antibacterial performance and/or antiviral performance used in this embodiment is usually added to a printing ink or a varnish and used. An additive that has an antibacterial efficacy or an antiviral efficacy is preferably used as this additive. An additive that has both antibacterial performance and an antiviral performance is more preferably used since many have the antibacterial efficacy and the antiviral efficacy simultaneously.

Examples of the active component of an additive that has antibacterial performance and/or antiviral performance include inorganic substances such as silver ion-based, titanium oxide-based, calcium hydroxide-based (mainly, calcined shell powders), halogen-based, copper ion-based, and peroxide/ozone-based substances. Examples of organic substances include quaternary ammonium-based, amine-based, alcohol-based, aldehyde-based, phenol-based, carboxylic acid-based, isothiocyanate-based, isothiazoline-based, piguanide-based, pyridine-based, epoxide-based, and surfactant-based substances. Among these, many silver-based substances are used, which are used not only as a silver ion alone but also as zeolite-silver, silver-zinc based substances, silver-phosphoric acid complexes, etc.

Examples of the inks and varnishes that can be used in this embodiment are disclosed in Table 1 below along with the trade names, antibacterial activity values, antiviral activity values, and actual antibacterial agents and antiviral agents.

**[Table 1]**

| Varnish or ink | Durability test category | | Antibacterial activity value | | Antiviral activity value | | Antibacterial agent and antiviral agent |
|---|---|---|---|---|---|---|---|
| | | | Escherichia coli | Staphylococcus aureus | Influenza virus | Feline calicivirus | |
| GPW-5007 G-350 (BV) produced by DIC Graphics Corporation | Water resistance | 0 | ≥ 6.1 | ≥ 5.3 | ≥ 4.8 | - | Silver-based |
| | Light resistance | 1 | ≥ 6.0 | ≥ 4.8 | ≥ 4.6 | - | |
| UV OL LED antibacterial/antiviral varnish SCP produced by TOKYO PRINTING INK MFG. CO., LTD. | Water resistance | 0 | > 3.3 | > 2.1 | 4.5 | ≥ 4.2 | Calcium hydroxide (calcined shell powder) |
| | Light resistance | 1 | > 3.6 | 2.4 | ≥ 4.4 | ≥ 4.2 | |
| UV antibacterial/antiviral coat varnish SCP produced by TOKYO PRINTING INK MFG. CO., LTD. | Water resistance | 0 | 5.6 | ≥ 3.3 | 4.5 | ≥ 4.2 | Calcium hydroxide (calcined shell powder) |
| | Light resistance | 1 | 2.1 | ≥ 3.3 | ≥ 4.4 | ≥ 4.2 | |
| FD AVS OP varnish series produced by Toyo Ink SC Holdings Co., Ltd. | Water resistance | 0 | ≥ 4.3 | ≥ 5.1 | ≥ 4.5 | - | Silver-based |
| | Light resistance | 1 | ≥ 4.8 | ≥ 4.6 | ≥ 4.5 | - | |
| NU Mcure UV Niowana ink clean guard produced by Miyako Printing Ink Co., Ltd. | Water resistance | 2 | > 5.7 | > 2.8 | 3.1 | - | Silver-based |
| | Light resistance | 1 | > 5.8 | > 2.6 | ≥ 4.2 | - | |
| Ecoheart S Niowana ink clean guard produced by Miyako Printing Ink Co., Ltd. | Water resistance | 0 | > 6.0 | > 4.0 | ≥ 4.1 | 4.2 | Silver-based |
| | Light resistance | 1 | > 6.1 | > 4.1 | ≥ 3.9 | ≥ 4.4 | |
| UV Rex SEALS series produced by Dainichiseika Color & Chemicals Mfg. Co., Ltd. | Water resistance | 0 | 5.7 | 2.5 | 4.1 | - | Silver-based |
| | Light resistance | 1 | 5.5 | 2.4 | 4.1 | - | |

In Table 1, the column of the durability test category indicates the category and content of the durability test performed as a pretreatment, in which "0" indicates that an immersion test that involves immersing the product in water was omitted since the product does not usually come into contact with water, and "2" indicates that the product was immersed in water at a water temperature of 45 to 55°C for 16 to 18 hours. In the light resistance category, "1" indicates that a product was irradiated with a xenon lamp for 9.5 to 10.5 hours or with sunlight for 7.6 to 8.4 hours since the product has little chances of being exposed to light.

In the table, "-" for the antiviral activity value indicates that the measurement was not conducted.

All of these inks and varnishes have an antibacterial activity value and an antiviral activity value of 2 or more; thus, it is understood that, as long as these inks and varnishes are used by typical methods, the packaging 1 of this embodiment would exhibit necessary antibacterial properties and antiviral properties.

Usually, the brand name, the company name, and the content description of the tobacco product, etc., are printed underneath where the ink or varnish of the present embodiment has been applied (between the hard package and the ink or varnish) or over the ink or varnish (not illustrated). Depending on the package design, the type of ink, the printing pattern, the number of times the ink is printed, etc., can be changed as appropriate. These changes can change the appearance and, for example, expand the flexibility of presenting the brand image.

In a preferred embodiment, the color ink prints such as the brand name, the company name, and the content description are directly applied (printed) on the base paper used as the material for the hard package.

In addition, as with typical hard packages, an over print (OP) varnish may be applied to a region where the color ink has been applied or to a region where the color ink has not been applied, so as to perform OP varnish treatment. Preferably, the OP varnish treatment is performed on a region where the color ink has been applied.

The OP varnish treatment can protect the layer underneath the OP varnish treatment from scratches and contamination, and applying the OP varnish to the color ink print can protect the color ink and impart gloss to the surface of the color ink. The OP varnish is roughly classified into oil-based, water-based, and UV These three types of the OP varnishes are each further classified into a glossy type and a matte type. A glossy type is preferable to make the surface smoother and flatter. The properties required of the OP varnish used with the hard package include slidability, friction resistance, heat resistance, and light resistance, for example. An OP varnish that has a desired property is preferably selected and used.

Furthermore, two or more OP varnishes with different properties may be used simultaneously, or OP varnishes having different properties can be used to treat different regions.

Particularly preferably, an antibacterial and/or antiviral ink or varnish of the present embodiment is used instead of the OP varnish. The ink or varnish of the present embodiment is preferably applied to as large areas of the surface of the hard package as possible, and thus when color ink prints are present, the ink or varnish of the present embodiment can protect the color ink from scratching, delamination, etc.

By using the ink or varnish of the present embodiment without an OP varnish treatment and by merely changing the OP varnish treatment step in the package body 2 production step to a step of applying the ink or varnish of the present embodiment (printing), the packaging 1 that includes a hard package can be produced without changing the number of steps in the whole process. Accordingly, additional investment on the production facility is unnecessary, and a package of the present embodiment can be obtained without changing the number of production steps, the time needed for the production, etc.

The method for producing the packaging 1 of this embodiment preferably includes printing, in advance, a color ink, an ink or varnish of the present embodiment, etc., onto a base paper used as a material for the hard package, and assembling the base paper into a packaging 1 by using a packaging machine.

The ink or varnish of the present embodiment may be colorless or may be colored by incorporation of a pigment.

### <Second embodiment: soft package>

As with the packaging 1 according to the first embodiment, a packaging 1A according to a second embodiment accommodates a tobacco product, and has a region in at least a part of a surface thereof, the region exhibiting antibacterial properties and/or antiviral properties.

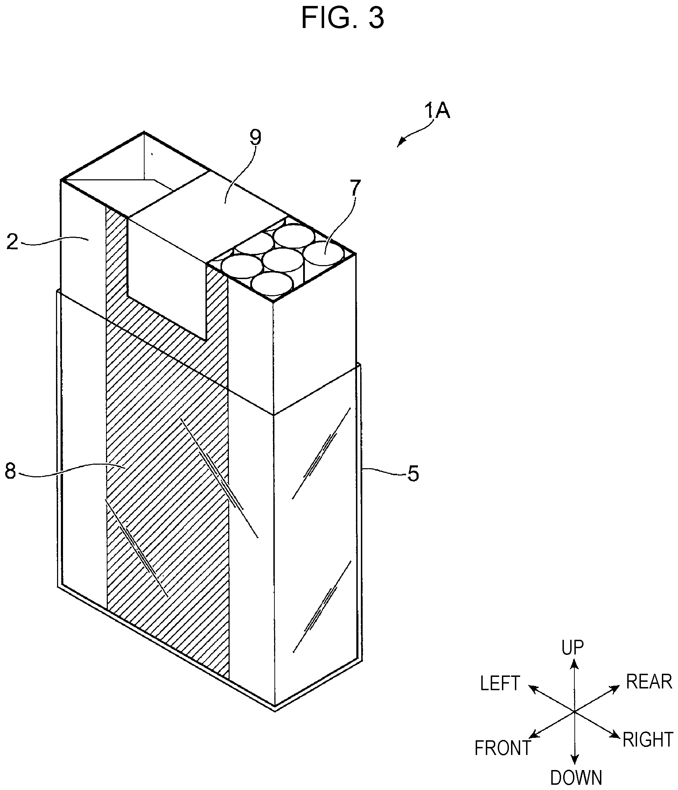

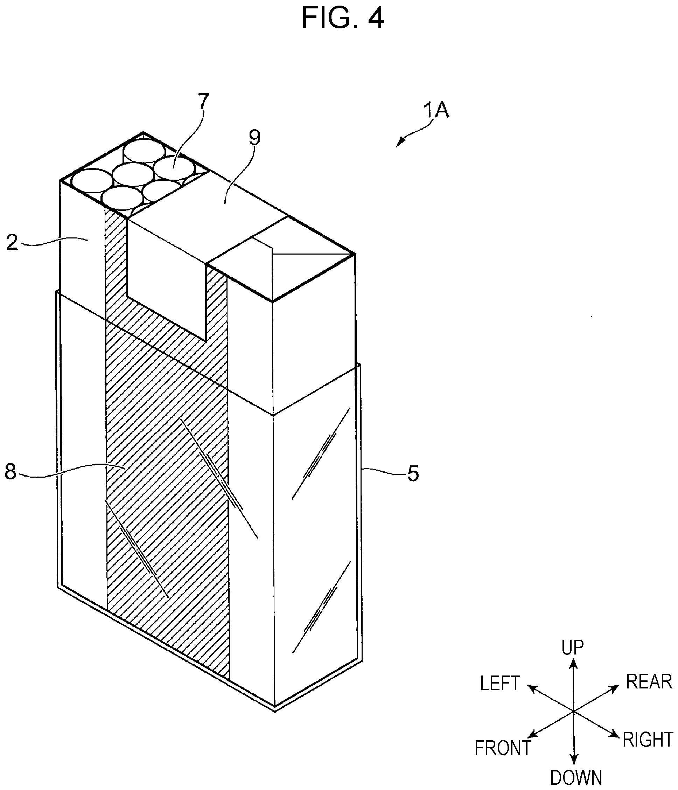

Figs. 3 and 4 illustrate a packaging 1A which is one example a soft package according to the second embodiment. Fig. 3 is a perspective view from one side (for the purpose of convenience, this is referred to as from the front side). Fig. 4 is a perspective view from the opposite side (for the purpose of convenience, this is referred to as from the rear side). Both Figs. 3 and 4 illustrate the configuration after the film 5 is opened.

The packaging 1A accommodates a content 7 in which 20 pieces of a tobacco product (not illustrated) such as cigarettes are wrapped with an inner wrapping paper and which has a closed surface formed by folding a part of the inner wrapping paper on the one end side of the tobacco products. As with the inner wrapping paper of the hard package according to the first embodiment, an example of the inner wrapping paper is a laminate obtained by laminating an aluminum layer with an inner side of a paper substrate layer containing a fibrous cellulose-based material.

The soft package is constituted by a package body 2 and has a substantially cuboid shape. Unlike the hard package, the soft package lacks a part corresponding to the lid, and the closing surface of the content 7 is exposed from the part corresponding to the upper surface of the cuboid. In addition, the packaging 1A includes a paper seal 9 glued to the package body 2 so as to straddle over the closing surface of the content 7.

In opening the package 1A, the user in many cases rips away at least a part of the portion of the content 7 corresponding to the closing surface.

The soft package is also referred to as a soft pack and is obtained by forming a thin paper into a substantially cuboid shape lacking a top surface as illustrated by the packaging 1A in Figs. 3 and 4. Any regular paper can be used as the base paper that serves as a material for the soft package without any limitation. The base paper is preferably a paper having a smooth and flat surface since the brightness of the soft package can be enhanced. The thickness of the base paper is not particularly limited. The grammage of the base paper is preferably 50 gsm or more and more preferably 70 gsm or more and more preferably 150 gsm or less and yet more preferably 120 gsm or less from the viewpoints of strength and formability for assembling into a box shape.

In this embodiment, the ink or varnish of the present embodiment is applied to the surface of the soft package.

As illustrated in Figs. 3 and 4, a region 8 where the ink or varnish is applied extends throughout the center portions of the front and rear surfaces in the up-down direction. From the viewpoint of sufficiently providing antibacterial efficacy and/or antiviral efficacy, the area of application is preferably 60% or more of the entire surface of the package body 2 of the package 1A, more preferably 70% or more, and yet more preferably 80% or more. Most preferably, the ink or varnish of the present embodiment is applied to substantially all of the surface of the package body 2. Furthermore, a varnish may be applied to at least one of and preferably both of a surface where the content 7 is exposed and the paper seal 9.

The ink or varnish of the present embodiment can be applied by, for example, printing. When application is carried out on a part of the soft package surface, any desired site can be selected, for example, the entire front surface, the entire rear surface, or the like of the soft package can be selected. As with the first embodiment, the ink or varnish of the second embodiment is also a printing ink and a varnish that contains an additive that has antibacterial performance and/or antiviral performance, and, in particular, a printing ink and a varnish that has both antibacterial performance and antiviral performance is appropriate. Usable additives, inks, varnishes, etc., are the same as those of the first embodiment.

For the ink or varnish of the present embodiment also, the ink or varnish application amount is preferably in a similar range to that of the ink or varnish of the first embodiment.

In addition, in this embodiment also, color ink printing, OP varnish treatment, etc., are carried out. Preferably, the ink or varnish of this embodiment is applied to a color ink print over the entirety of the package body 2.

In this embodiment also, the antibacterial properties and antiviral properties can be imparted by applying the ink or varnish of this embodiment instead of the typical OP varnish treatment without changing the number of production steps and the time required for the production, etc.

The method for producing the package of this embodiment preferably includes printing, in advance, a color ink, an ink or varnish of the present embodiment, etc., onto a base paper used as a material for the package, and assembling the base paper into a package by using a packaging machine.

### <Other modifications>

In the embodiments described above, the cases in which antibacterial properties and/or antiviral properties are imparted to the hard package and the soft package are mainly described as examples. This is because these packages are frequently placed in bags, pockets, etc., and carried around after opening the films. Alternatively, the antibacterial properties and/or antiviral properties can also be imparted to the film 5.

The antibacterial and/or antiviral inks and varnishes to be used are not limited to those described above, and any desired one can be selected as long as antibacterial properties and/or antiviral properties are exhibited. Furthermore, multiple inks and varnishes can be used in combination, and multiple layers can be formed by application, for example.

In the first embodiment described above, a hard package with an openable upper side is described as an example, alternatively, a package having an openable right or left side can also be applied. The first and second embodiments can also be applied to a package body 2 having rounded corners, etc.

In addition, the surface of the package may be subjected to embossing, mold-pressing, etc., in addition to printing with a color ink, etc. Furthermore, the visual feel of the antibacterial and/or antiviral ink or varnish of the present embodiment may be high gloss or low gloss, etc.

### Reference Signs List

1, 1A: packaging
2: package body
3: lid
4: hinge
5: film
6: open tape (tear tape)
7: content
8: site where varnish or ink has been applied
9: paper seal

## Claims

1. A packaging
accommodating a tobacco product, and
comprising a region in at least a part of a surface thereof, the region exhibiting antibacterial properties and/or antiviral properties.

2. The packaging according to claim 1, wherein the packaging is a hard package made of a heavy paper or a soft package made of a thin paper.

3. The packaging according to claim 1 or 2,
wherein a layer containing an additive having antibacterial performance and/or antiviral performance is present in the surface.

4. The packaging according to Claim 3,
wherein the additive is at least one selected from the group consisting of silver ion-based, titanium oxide-based, calcium hydroxide-based, halogen-based, copper ion-based, peroxide/ozone-based, quaternary ammonium-based, amine-based, alcohol-based, aldehyde-based, phenol-based, carboxylic acid-based, isothiocyanate-based, isothiazoline-based, piguanide-based, pyridine-based, epoxide-based, and surfactant-based substances.

5. The packaging according to claim 3 or 4,
wherein the additive is applied to 60% or more of the surface.

6. A packaging production method for producing a packaging that accommodates a tobacco product and that has a region in at least a part of a surface thereof, the region exhibiting antibacterial properties and/or antiviral properties, the method comprising:
applying, to a substrate of the packaging, a printing ink that has the antibacterial properties and/or antiviral properties or a varnish that has the antibacterial properties and/or antiviral properties.

## Amended claims

### Amended claims under Art. 19.1 PCT

1. A packaging
accommodating a tobacco product, and
comprising a region in at least a part of a surface thereof, the region being imparted with antibacterial properties and/or antiviral properties by application.

2. The packaging according to claim 1, wherein the packaging is a hard package made of a heavy paper or a soft package made of a thin paper.

3. The packaging according to claim 1 or 2,
wherein a layer containing an additive having antibacterial performance and/or antiviral performance is present in the surface.

4. The packaging according to Claim 3,
wherein the additive is at least one selected from the group consisting of silver ion-based, titanium oxide-based, calcium hydroxide-based, halogen-based, copper ion-based, peroxide/ozone-based, quaternary ammonium-based, amine-based, alcohol-based, aldehyde-based, phenol-based, carboxylic acid-based, isothiocyanate-based, isothiazoline-based, piguanide-based, pyridine-based, epoxide-based, and surfactant-based substances.

5. The packaging according to claim 3 or 4,
wherein the additive is applied to 60% or more of the surface.

6. A packaging production method for producing a packaging that accommodates a tobacco product and that has a region in at least a part of a surface thereof, the region exhibiting antibacterial properties and/or antiviral properties, the method comprising:
applying, to a substrate of the packaging, a printing ink that has the antibacterial properties and/or antiviral properties or a varnish that has the antibacterial properties and/or antiviral properties.
